# EUROPEAN PATENT SPECIFICATION

(11) **EP 3 515 820 B1**
(45) Date of publication and mention of the grant of the patent: **01.06.2022**
(21) Application number: 17801512.9
(22) Date of filing: 19.09.2017
(51) Int. Cl.: B64D 11/00, A47B 31/04, A47B 31/06, B62B 3/02, A47B 31/00

(54) **TROLLEY, COLLAPSIBLE TOP UNIT, AND MEANS OF PASSENGER TRANSPORT**
WAGEN, FALTBARER AUFSATZ UND MITTEL ZUR PERSONENBEFÖRDERUNG
CHARIOT, UNITÉ SUPÉRIEURE REPLIABLE ET MOYEN DE TRANSPORT DE PASSAGERS

(30) Priority: 19.09.2016 NL 2017494
(43) Date of publication of application: 31.07.2019
(73) Proprietor: Ockel Computers B.V., 2516 AB 's-Gravenhage (NL)
(72) Inventor: HAGG, Jan Paul, 2516 AN 's-Gravenhage (NL); HAAKSMA, Tim, 2516 AN 's-Gravenhage (NL)
(74) Representative: V.O.
(86) International application number: PCT/NL2017/050617
(87) International publication number: WO 2018/052302

(56) References cited:
- WO-A1-2010/046479
- WO-A2-2008/079345
- US-A1- 2008 216 368
- US-A1- 2012 212 116
- US-A1- 2013 333 550

## Description

The invention relates to a trolley or cart, especially an airplane trolley or a railway trolley, in particular for use by a crew inside an aircraft or train for onboard transport of items, for instance beverages, food, merchandise and/or other items, during a flight or train journey.

Such trolleys are well known and usually comprise a substantially box-shaped main body provided with wheels, especially caster wheels or so-called casters, at a bottom side of said structure. Said substantially box-shaped main body defines an interior space for storing items, which often are provided in or on drawers or trays, which may be supported by means of tray supports or rails. Said tray supports or rails can be provided, which protrude inwardly from inner sides of two lateral side walls of the substantially box-shaped main body and which longitudinally extend along the respective lateral side wall. Usually, the substantially box-shaped main body includes a top side provided with a recess which defines a peripheral wall at least partly circumscribing the top side, wherein said recess has a width corresponding to the width of the interior of the substantially box-shaped main body, such that the tray initially stored with said interior may be placed on top of the trolley in a manner in which a bottom of said tray interlocks with the recessed top side of the trolley's main body.

Publication US 2008/0 216 368 A1 discloses a public transport vehicle vending trolley display device comprising a tray having a base and opposed pairs of upstanding side and end walls, wherein the tray is arranged to fit within an internal compartment of the trolley for storage and rest on an upper surface of the trolley in use, wherein the display device further comprises a first generally rectangular elongate link plate hinged by one long edge to one tray side wall, and wherein an advertising panel is hinged to the opposed long edge of the link plate, such that said advertising panel overlies the tray base when the display device is stored in the trolley and such that said advertising panel is hinged down to hang down alongside a side face of the trolley during use of the display device.

Publication WO 2008/079 345 A2 discloses a foldable advertising apparatus for placement on a food cart or "duty free" cart which permits the passenger to readily identify that "duty free" sale is taking place. The foldable advertising apparatus comprises a centrally positioned panel for placement in a recess formed in a top side of the cart, and further comprises advertisement panels which are hingedly attached to the centrally positioned panel by means of first intermediate panels and second intermediate panels. During use, the first intermediate panels, which have a width generally approximating the height of side wall segments defining the recess of the cart, extend upwards from the centrally positioned panel, whereas the second intermediate panels extend laterally and over the side wall segments, such that the advertisement panels hang down from the outer edges of the second intermediate panels and along side faces of the cart.

Publication US 2012/0 212 116 A1 discloses a mobile technology cabinet, comprising information technology (IT) equipment including a computer and monitor, which cabinet is provided with caster wheels and may be moved between patient locations such as patient rooms or beds where a health care provider may use the IT equipment to access and/or record information at the point of care, wherein the monitor can be raised from a first storage position to a second deployed position.

The present disclosure contemplates the provision of an alternative trolley. In particular, the disclosure contemplates the provision of an improved trolley, especially an improved airplane trolley or an improved railway trolley.

Thereto, in each embodiment, the present disclosure provides for a trolley provided with a collapsible top unit according to claim 1.

In short, the disclosure relates to a trolley provided with a collapsible top unit arranged for releasable placement on top of the trolley's substantially box-shaped main body, said collapsible top unit further being arranged to be convertible from a storage state, in which the top unit is collapsed, into an upright state, in which a base part of the top unit is received at least partly within a recess provided at the top of the substantially box-shaped main body and in which side walls of the converted top unit are extending upwards away from said base part, and in a manner defining a storage compartment between said multiple side walls.

In such manner, a commercially available airplane or railway trolley can conveniently be adapted to temporarily provide additional storage space, when desired. Said additional storage space may for instance be used to store items for serving drinks, food and/or snacks, especially items that may be put back by a flight attendant or an other user of the trolley, said items for instance including one more thermos jugs, drink cartons, bottles, cups and/or other products.

Alternatively or additionally, said additional storage space may be used for other purposes, for instance for storing items on sale, such as duty free products or the like.

In embodiments, one or multiple parts of the top unit, which parts define the multiple upward extending side walls in the upright state, can be substantially untransparent or opaque. In this manner, the additional storage space, if any, may be screened off at least partly, thereby for instance enabling cabin crew or other users of the trolley to put items to be stored within said additional storage space back in a somewhat careless manner without resulting in a sloppy appearance of the trolley, which may enable one to work faster. Additionally or alternatively, substantially or at least partly screening off additional storage space may enable one to keep certain items out of sight, for example duty free items or other items that one does not want or is not allowed to openly display, such as for instance items which may only be offered to adults, e.g. alcoholic beverages, cigarettes, adult material, etc.

By making at least one of the at least one side walls nontransparent, in particular by providing it with certain content, for example advertisement or promotions, other products can be advertised than the actual products physically present within the additional storage space provided by the top unit. For example in case of a duty free cart, this may be advantageous. For instance, products or other items that a user of the trolley often wants to get can be stored in said additional storage space, while other items can be advertised, for instance pricey and/or profitable items and/or items for which its supplier is paying a so-called slotting fee to for instance an air line company or an inflight service provider using the trolley.

It is noted that the top unit may thus not be intended and/or not be arranged for displaying the items stored therein, but may be used and/or intended and/or arranged for storing items within reach.

The top unit is arranged such that its multiple side walls have a certain minimum height in the upright state of the top unit, for instance to facilitate screening off items and/or screening off a worktop used by the user of the trolley and/or for instance to counteract that items stored within the additional storage space on top of the trolley's main body slide off unintentionally. Since the top unit is collapsible, the side walls of the top unit may be relatively high compared to side walls of a conventional trolley tray. As a result, items, such as for instance a stack of cups tipping over, can be prevented from falling off relatively well.

Preferably, in the upright state of the top unit, it may be substantially open at its upper side, e.g. being free of an upper wall, for instance to allow stored items to protrude at least partly from the additional storage space provided by said top unit.

In embodiments, the top unit can comprise at least three side walls, which in the upright state of the top unit define a left wall, a right wall and an end wall extending between said left wall and said right wall, wherein at least said left wall, said end wall and said right wall define the storage compartment at least partly. Preferably, said end wall, which may be a located near a front end side of the trolley which may form a distal end side with respect to a user of the trolley, can for instance interconnect two end sections of the left an right side walls, in particular at said front end side of the trolley. Additionally, the top unit may comprise a second end wall, preferably opposed to the first end wall. Said second end wall, for instance a proximal end wall or rear wall located relatively close to a user of the trolley may be relatively low, for instance in order to facilitate that items can be put into the additional storage space relatively easily and/or can be taken out of there relatively easily. Said second end wall may form a structural interconnection between the left and the right side walls, e.g. in order to support said left an right side walls in the upright state of the top unit.

The height of the multiple side walls is at least 15 cm, preferably at least 20 cm, such as for instance at least 25 cm or at least 30 cm.

The top unit is arranged such that in the storage state or so-called collapsed state of said top unit, it can be collapsed in such a manner that parts of the top unit defining the one or more upward extending side walls in the upright state are substantially parallel with the base part when said top unit is collapsed. Advantageously, the top unit can be collapsed into a substantially flat packet, e.g. in order to save space when the top unit is stored when not in use.

The storage compartment provided by the top unit has a width substantially corresponding with the width of the interior of the substantially box-shaped main body of the trolley, such that in the upright state of the top unit said storage compartment is arranged to receive therein a tray or drawer dimensioned to be stored within the interior of the substantially box-shaped main body. Instead of placing such tray or drawer into the recess at the top of the main body of the trolley, said tray or drawer can thus be placed in the top unit.

According to an extra advantageous elaboration, the collapsible top unit may alternatively, or additionally, be arranged such that in its storage state, said top unit has a width which corresponds with the width of the interior of the substantially box-shaped main body of the trolley. Hence, the collapsed top unit can be conveniently stored within the trolley's main body.

According to a further elaboration, at least one of the one or more side walls of the top unit can be provided with an electronic visual display, preferably wherein said at least one electronic visual display faces outwards with respect to the storage compartment in the upright state of the top unit. In use, especially in the upright state of the top unit, said electronic visual display may extend at least partly, preferably largely, more preferably substantially completely, above the trolley's main body.

Additionally, the top unit may be provided with an embedded computer for controlling the at least one electronic visual display.

By providing the top unit with an electronic visual display, which for instance can show different content, e.g. different stills, the appearance of a trolley provided with such top unit may rapidly and/or easily be altered. For example, a top unit provided with at least one such display may be arranged to switch between different decorations, which for instance may be stored on a memory device provided in, at or on the top unit. Enabling a swift and/or easy modification of decorations and/or displayed advertisements or promotions and/or other content may facilitate that the top unit can be used in different situations, and may be conveniently interchanged between flights in different regions.

Actually, during use, the electronic visual display can even show different content at different moments during a single flight or rail journey. For example, when serving out meals, the display can show the menu, whereas said same display may show promoted or duty free products when the tables are cleared up. It is of course also possible that different menu's and/or different promotions are shown in different travel class areas, such as a first class area, a business class area and an economy class area.

Further, it is noted that although the top unit can comprise one or multiple electronic visual displays, which may be arranged to show stills, the top unit may alternatively or additionally be arranged such that said display can display slide shows and/or movies, such as animations.

Although the top unit may thus be provided with one or multiple electronic visual displays, the top unit, in particular one or more outer surfaces of the one or more side walls of said top unit, which may be facing outwardly in the top unit's upright state, may be provided with stationary decorations and/or displayed advertisements or promotions, in particular printed decorations, advertisements and/or promotions.

In such cases, but also in cases in which an electronic visual display is provided, certain content can be shown regardless of the appearance of a tray placed on top of the trolley. This is, content such as certain decoration, advertisements, promotions and/or other content can be shown by means of a single device, i.e. by means of a certain top unit. As a consequence, even when a tray placed on top of the trolley is replaced by another tray, the same content can be kept shown by the top unit which can be kept in place when said tray is removed or replaced. When decorations, advertisements, promotions and/or the like are desired, only a single device has to be provided therewith, in stead of decorating multiple trays, or in stead of shifting items between a standard or non-decorated tray and a specific decorated tray. This may save costs and may counteract that (many) specially printed trays will be needed for particular occasions.

It is noted that the top unit, in particular at least one side wall thereof, for example a front end side wall of said top unit, which can be an end wall located furthest from a user pushing the trolley, can be provided with particular content to be shown, such that said content is shown at a location above the side walls of the trolley's main body, in particular above the front wall of the trolley's main body. This is advantageous, because the top unit may be visible from a further distance than the trolley's main body. This may enable passengers seated relatively far away from the trolley and/or passengers not seated directly next to an aisle of an aircraft or train to see the content, which then preferably can be shown by an electronic visual display, even when seats and/or other passengers, for instance in front of him/her, are blocking his/her view on the side walls of the trolley.

In embodiments, in the top unit's upright state, one or more, preferably each, outwardly facing surfaces of a respective one of the multiple side walls of the top unit may be substantially flush with an outwardly facing surface of a corresponding outer wall of the substantially box-shaped main body of the trolley. Not only may this aid the overall appearance of a trolley provided with such top unit, counteracting overhang may also counteract that the top unit and an unwary passenger may collide. It is noted that substantially flush may be considered at least as meaning that said outwardly facing surface of a respective side wall of the top unit may be offset with respect to the outwardly facing surface of the corresponding outer wall of the main body over less than 3 cm, preferably less than 2 or even 1 cm, and/or be offset over less than the thickness, in particular at most half of the thickness, of said corresponding outer wall of the main body.

Advantageously, an aircraft, a train, a passenger ship or other means of passenger transport, in particular a means of transport for commercial travel, can be provided with an embodiment of a trolley as described in this disclosure.

Advantageous embodiments according to the disclosure are described in the appended claims.

By way of non-limiting examples only, embodiments of the present disclosure will now be described with reference to the accompanying figures in which:
Fig. 1 shows a schematic perspective view of a trolley with a collapsible top unit according to a first embodiment;
Fig. 2A shows a schematic perspective view of two trolleys according to a second embodiment, wherein each of said two trolleys is provided with a top unit in a respective state thereof;
Fig. 2B shows a schematic cross sectional view of a part of the trolley and top unit of Fig. 2A, which further is provided with a trolley tray;
Fig. 3 shows schematic perspective views of two corresponding top units in an upright state and a collapsed state;
Fig. 4 shows a schematic perspective view of a further embodiment of a trolley, which trolley is provided with two top units; and
Fig. 5 shows schematic perspective views of two further embodiments of a top unit.

It is noted that the figures show merely preferred embodiments according to the invention. In the figures, the same or similar reference signs or numbers refer to equal or corresponding parts.

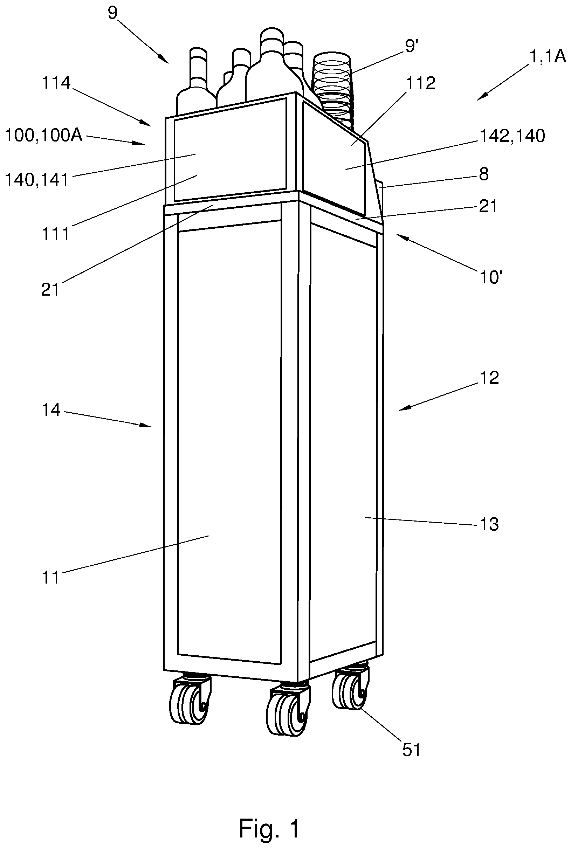

Fig. 1 shows a schematic perspective view of a trolley 1, in particular a so-called galley cart, with a collapsible top unit 100 according to a first embodiment.

The trolley or so-called cart 1 may be of a type used in commercial travel, for instance in an airplane, in a train, or onboard of a ship.

The trolley 1 can for instance be an airplane trolley or so-called in-flight trolley, in-flight cart, airline cart, airline trolley, or aviation trolley. Alternatively, the trolley 1 or so-called cart 1 can be a train, rail, or railway trolley.

The trolley 1 may be for use by a crew inside an aircraft or train for onboard transport of items 9, such as beverages 9, food, merchandise and/or other items 9, in particular during a flight or train journey. The trolley 1 may thus for instance be a food and beverage service cart or so-called service trolley, service cart, catering trolley, or meal trolley, or the like.

Alternatively or additionally, the trolley 1 may for instance be used as a sales trolley or vending trolley for retail onboard. For example, the trolley 1 may be a duty free trolley for selling duty free products, or the like.

The trolley 1 comprisesa substantially box-shaped main body 10 or substantially box-shaped structure 10. Actually, the entire trolley 1, at least when no top unit 100 is installed on top of the trolley's main body 10, can have a box-like appearance.

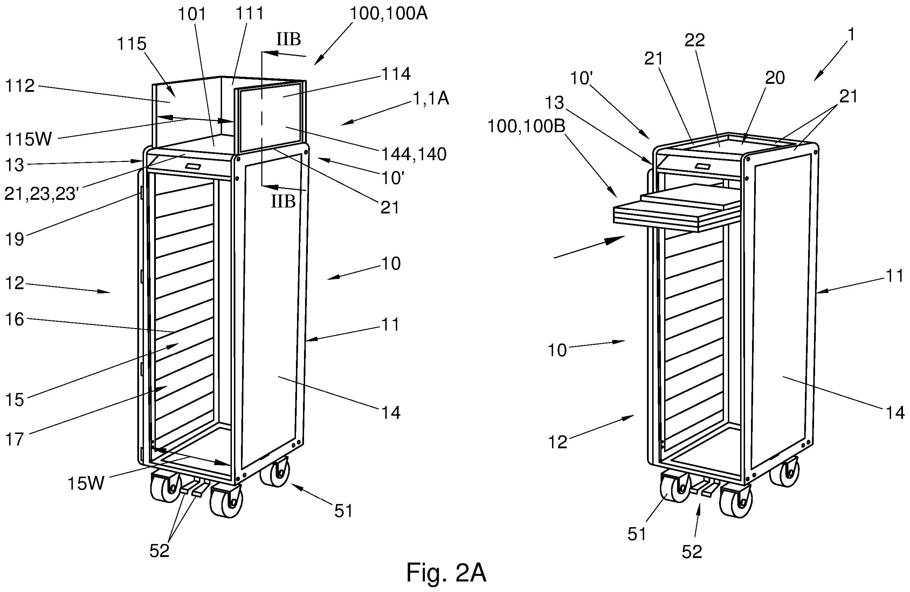

As can be seen in Fig. 2A, which shows a schematic perspective view of two trolleys 1 according to a second embodiment, the top side 10' of the substantially box-shaped main body 10, which in particular can be substantially horizontal, is provided with a recess 20 which defines a peripheral wall 21 at least partly circumscribing the top side 10'.

The peripheral wall 21 may at least partly be formed by parts of one or more side walls 11-14 of the substantially box-shaped main body 10 of the trolley 1, in particular by upper regions of said side walls 11-14. Said side walls 11-14 may then for instance extend beyond an upper wall 22, which may define the bottom of the recess 20. Alternatively or additionally, the peripheral wall 21 may at least partly be formed by one or more fence-like structures 23, for example a fence-like structure 23 serving as a handle 23'of the trolley 1.

The substantially box-shaped main body 10 may further define a front side 11, a rear side 12 and two lateral sides 13, 14. The main body 10 can be a substantially rigid structure. In embodiments, the substantially box-shaped main body 10 or structure 10 may be substantially shaped as a cuboid, especially substantially shaped as a rectangular cuboid. Said main body 10 can define an interior space 15, in which beverages, food, merchandise and/or other items can be stored. Said interior space 15 can be defined at least partly by side walls 11, 12, 14 of the substantially box-shaped main body 10 of the trolley 1. The interior 15 may be provided with supports 16, e.g. tray supports 16, for supporting trays, drawers, boards and the like. The supports 16 may for instance be shaped as bars, rails, ridges, or the like.

Said tray supports or rails can protrude inwardly from inner sides of the two lateral side walls 13, 14 of the substantially box-shaped main body 10 and may longitudinally extending along the respective lateral side wall 13, 14, i.e. may extend from the front side 11 of the trolley 1 to the rear side 12 of the trolley 1.

The interior space 15 of the trolley 1 may thus for instance be arranged as a tray compartment.

At a lower side of the substantially box-shaped main body10, wheels 51 may be provided, especially caster wheels, which for instance may be provided at each lower corner of the trolley's main body 10. The trolley 1 may be arranged such that one or multiple, e.g. all, of the wheels 51 can be braked to hold the trolley 1 in position. Thereto, the trolley 1 may for instance be provided with one or more pedals 52, e.g. one brake pedal and one release pedal.

In the embodiment shown in Fig. 2A, the front side 11 of the structure 10 is provided with a closable opening 17 for providing access to the interior 15. The opening 17 may be releasably or temporarily closable. For example thereto, the trolley 1 may comprise a door 18 for closing said opening 17. Preferably, the door 18 may be pivotally connected to the substantially box-shaped structure 10, e.g. by means of one or multiple hinges 19.

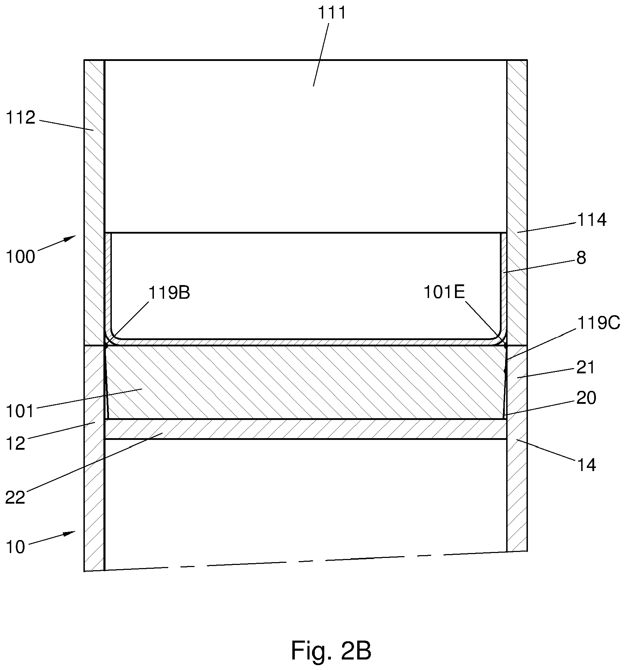

Here, in the embodiments of Figs. 1 and 2, the trolley 1 is a so-called half size trolley 1A having a rear side 12 which usually cannot be opened. However, in other embodiments, especially in case of so-called full size trolleys 1B, which usually can be about twice as long as a half size trolley 1B and can then be about 70-85 cm long (measured from front end to rear end), the rear side 12 may also be provided with a second door, for instance such that two flight attendants can access the items in the trolley 1 from two opposite sides 11, 12.

Further, the trolley 1 is provided with a collapsible top unit 100 arranged for releasable placement on top of the trolley's main body 10.

It is noted that the trolley 1 may in embodiments be a standard trolley, especially an ATLAS trolley, a KSSU trolley or an ACE trolley. The trolley 1 may be a purchased device that later on can be retrofitted by a top unit 100.

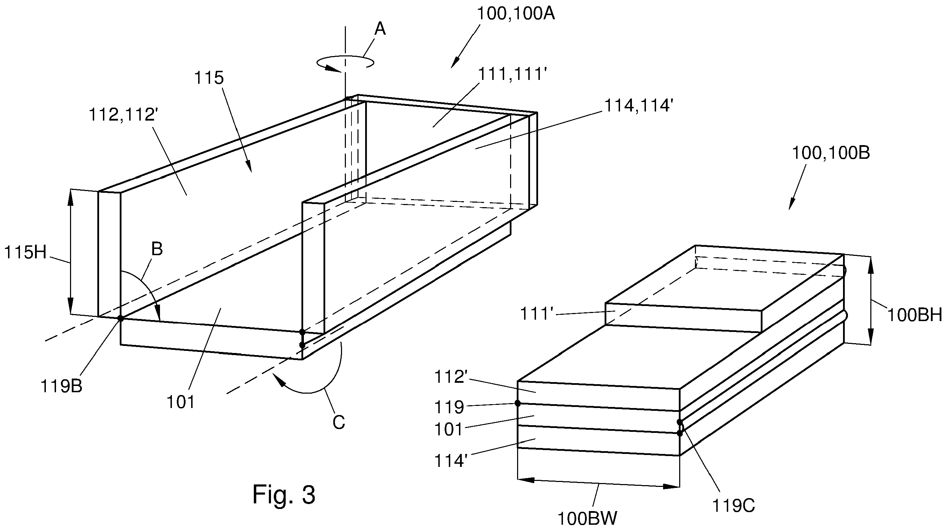

As can be seen in Fig. 2A, and also in Fig. 3 which shows schematic perspective views of two corresponding top units 100, the collapsible top unit 100 is arranged to be collapsible from an upright state 100A or so-called use state 100A into a collapsed state 100B or so-called storage state 100B. In said upright state 100A, a base part 101 of the top unit 100 is received at least partly within the recess 20. The base part 101 is arranged and/or dimensioned such as to be at least partly held or retained in said recess 20 during use. For example, the base part 101 can be shaped and/or dimensioned such as to be substantially prevented from moving or sliding back and forth and/or from moving or sliding laterally when received at least partly within said recess 20 at the top side of the trolley's 1 main body 10. Further, in said upright state 100A, side walls 111, 112, 114 are extending away from said base part 101 in an upward direction and defining a storage compartment 115 therebetween. Said storage compartment 115 can provide additional storage space with respect to the interior 15 of the trolley's main body 10, which additional storage space 115 may for instance be used for storing items 9 when the trolley 1 is in use.

Advantageously, in the top unit's upright state 100A, one or more outwardly facing surfaces of respective side walls 111, 112, 114 of the top unit, in particular a left and a right side wall 112, 114, may be substantially flush with the outwardly facing surfaces of corresponding outer walls 11, 12, 14 of the substantially box-shaped main body 10 of the trolley 1, as for instance can be seen in Fig. 2B, which will be discussed below. Preferably, the thickness of one or more side walls of the top unit, in particular the thickness of the left side wall and/or the right side wall, may substantially correspond to the thickness of a corresponding portion of the peripheral wall 21 and/or the thickness of the respective side wall 11, 12, 14 of the substantially box-shaped main body 10. In this context, it is noted that substantially corresponding thicknesses may be considered at least as meaning for instance that the thickness of a respective side wall is not more than twice the thickness of the respective corresponding wall of the substantially box-shaped main body 10 of the trolley 1, preferably not more than 150% of said wall thickness.

As a result of substantially flush wall parts of the top unit 100 and the trolley's main body 10, said main body 10 and said top unit 100, which may form a top-piece or end-piece placed on top of said main body 10, may radiate the appearance of a single unit or the appearance of a more or less integrated whole, while they 10, 100 actually are formed by two separate parts 10, 100.

In the storage state 100B, the top unit 100 is collapsed, in a manner that parts 111', 112', 114' of the top unit 100 defining the upward extending side walls 111, 112, 114 in the upright state 100A are substantially parallel with the base part 101 when the top unit 100 is collapsed 100B.

In embodiments, the top unit 100 can comprise at least three side walls 111, 112, 114, which in the upright state of the top unit define a left wall 112, a right wall 114 and an end wall 111 extending between said left wall 112 and said right wall 114, wherein at least said left wall 112, said end wall 111 and said right wall 114 then define the storage compartment 115 at least partly.

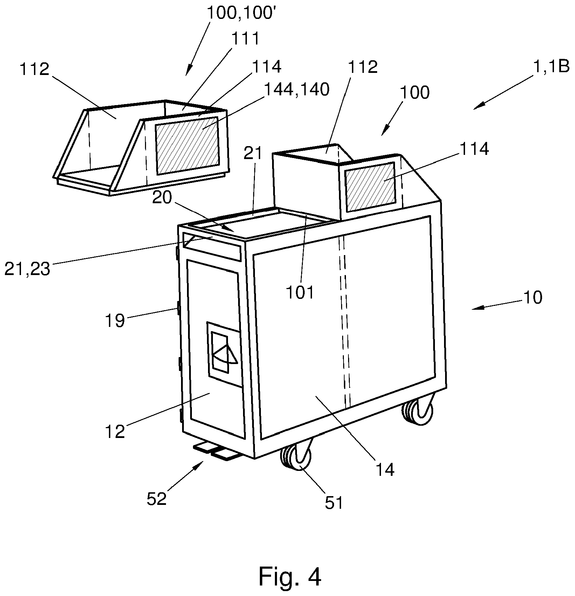

For example, the left wall and/or the right wall may have a length substantially corresponding with the length of the corresponding side of the trolley's main body 10. However, in alternative embodiments, the left and/or right side walls of the top unit 100 may have a different length. For instance, such as is shown in Fig. 4, which shows a so-called full size trolley 1B provided with a top unit 100 and an additional top unit 100', the left and/or right side walls of the top unit 100 may for instance substantially correspond with the half of the length of the trolley's main body 10.

As for instance can be understood from Fig. 2A, the storage compartment 115 defined by the upwards extending top unit's side walls 112, 111, 114 in the top unit's upright state 100A has a width 115W substantially corresponding with the width 15W of the interior 15 of the substantially box-shaped main body 10 of the trolley 1, such that in the upright state 100A of the top unit 100 said storage compartment 115 is arranged to receive therein a drawer or tray 8 dimensioned to be stored within the interior 15 of the substantially box-shaped main body 10 of the trolley 1. In Fig. 1 is shown that a tray 8 is placed within the converted top unit 100A. Although not clearly visible in the very schematic Fig. 3, which is not to scale, it is explicitly noted that the height 115H of the side walls of the top unit can at least in embodiments be relatively high with respect to the height 100BH of the collapsed top unit 100B. For example, the collapsed top unit 100B may have a height 100BH of less than half the height 115H the side walls of the converted top unit 100A. As can be seen in Fig. 1, the side walls of the top unit 100 may be relatively high with respect to the side walls of the tray 8, such that the top unit 100 can relatively well prevent that items can fall off from the trolley, for instance when a stack of cups 9' is tipping over.

Although the inner width 115W of the converted top unit 100A may thus substantially correspond with the inner width 15W of the trolley's main body 10, e.g. in order to facilitate storing conventional trolley trays 8 in said top unit in its use state 100A, the width 100BW of the top unit 100 in its collapsed state or so-called storage state 100B may additionally, or alternatively, also correspond with the width 15W of the interior 15 of the trolley's main body. In particular, the width 100BW of the collapsed top unit 100B may be slightly smaller than said width 15W of the main body's interior 15, such as to facilitate storing the collapsed top unit 100B therein.

In Fig. 3, an example is shown of how a collapsible top unit 100 may be folded from an upright state 100A into a collapsed state 100B, e.g. by folding end wall 111 along side wall 112 (see arrow A), by folding side wall 112 along the base part 101 (see arrow B), and by folding side wall 114 along an opposite side of the base part 101 (see arrow C). Thereto, as for instance can be seen in the exemplary embodiments of Figs. 2A, 2B and 3, one side wall 112 of the top unit in the upright state is at least partly formed by a substantially panel-shaped part 112' of the top unit 100 which is hingedly connected 119B to the base part 101 of the top unit. The other side wall forming part 114' may also be hingedly connected 119C to the base part 101, preferably by means of a double hinge 119C such that said side wall forming part 114' can be folded along the bottom side of the base part, but may seem to hinge above an upper edge 101E of the base part 101, e.g. in order allow that the respective side wall 114 may in use extend substantially above the side wall 14 of the trolley's main body 10. This can for instance be seen in Fig. 2B, which shows a schematic cross sectional view of a part of the trolley and top unit of Fig. 2A along line IIB-IIB, and which additionally shows a trolley tray 8 located within the additional storage compartment 115 formed by the top unit 100.

Here, and in other advantageous embodiments, the base part 101 may be such that it is not wider than the width 15W of the interior space 15 of the trolley's main body 10 and the heights 115H of the respective wall parts are not higher than the width 15W of said interior space 15. Further, the base part 101 and each of the side wall forming parts 111', 112', 114' are substantially formed as a single panel 101, 111', 112', 114'. However, in alternative embodiments, one or more parts 101, 111', 112', 114' of the top unit 100 may comprise multiple substantially panel-shaped parts, which for instance can be interconnected by means of a hinge construction.

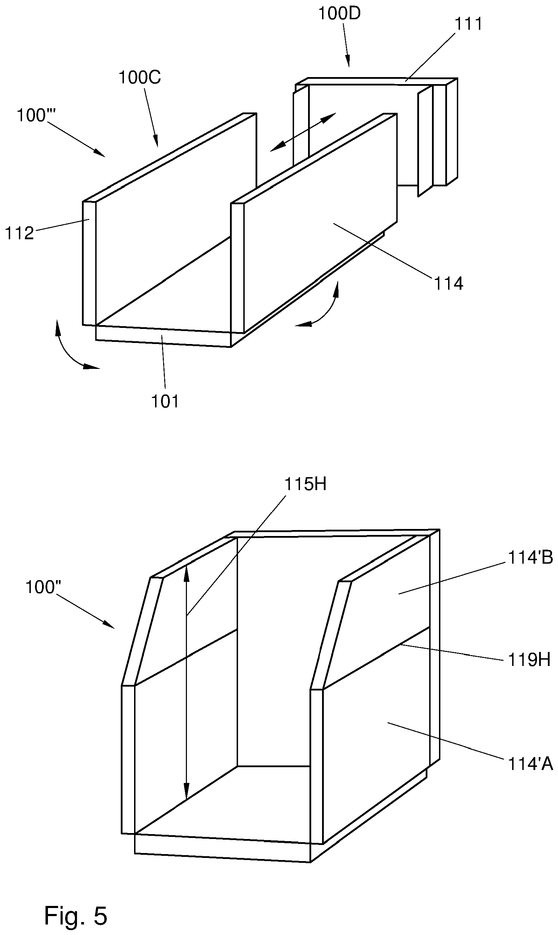

For example when a side wall forming part 111', 112', 114' is divided in at least two part or panels 114'A, 114'B by means of a hinge 119H substantially extending horizontally in the respective side wall 114 of the upright top unit 100A, said side wall may have a height 115H being larger than the width 15W of the interior space 15 of the main body 10, but can still be collapsed in a manner that it will fit within said interior space 15. This is for example the case for the alternative top unit 100" embodiment shown at the left hand side of Fig. 5.

Additionally or alternatively, the base part 101 may for instance comprise multiple parts (not shown) which can be collapsed, for example in order to provide a collapsed top unit 100B with a relatively small footprint.

As for instance can be seen in Fig. 1, parts 111', 112', 114' that define the upward extending side walls 111, 112, 114 in the upright state 100A can at least partly be substantially nontransparent.

In embodiments, at least one of the side walls is provided with an electronic visual display 140; 141, 142, 144. As will be appreciated, said at least one electronic visual display 140 can preferably face outwards with respect to the storage compartment 115 in the upright state of the top unit 100. In the shown embodiments, the left and right side wall 112, 114 and the front wall 111 each comprises a single electronic visual display 140 or screen. However, in alternative embodiments, for instance when a side wall is formed from multiple parts, for example hingedly interconnected parts, a single side wall may comprise multiple electronic visual displays 140. It will also be possible that one or multiple side walls, for instance proximal end wall near the user, is not provided with an electronic visual display 140, whereas one or multiple other side walls of the top unit are.

It is noted that the electronic visual display 140 can be a so-called direct view display which can be observed directly and can be a display device for the presentation of images, text, or video, which can be transmitted electronically. The display 140, in particular a digital display, can be in the form of a screen or monitor, preferably a relatively flat screen or monitor. For example, the display 140 can be an LCD display.

In embodiments, the electronic visual display 140 can be a display using low-energy display technologies. For example, the display may be an E-ink, preferably a color E-ink, display. As an alternative example of a low-energy display technologies, the display may be in the form of an organic light-emitting diode display, or so-called OLED display, for example comprising Polymer OLEDs. Not only can an OLED display be relatively energy efficient, OLED displays may also be relatively light, e.g. in comparison to LCD displays comprising a backlight, whereas such backlight can be omitted from the OLED display.

Further, the top unit 100 may be provided with an embedded computer, for example based on a CPU or microcontroller, for controlling one or multiple electronic visual displays 140. The computer may comprise a memory for storing content, e.g. comprising images, text, and/or video, to be displayed by the electronic visual display(s) 140, and/or may comprise a controller for controlling the display(s) 140. Although the computer may for instance be provided in the base part 101, it may alternatively be provided in another part of the top unit 100, for instance in a side wall forming part 111', 112', 114'. The computer may be provided with one or multiple input means, e.g. buttons, switches, a touch screen, e.g. formed by the electronic visual displays 140, a keyboard, a trackpad, a wireless connected input device, such as a smartphone, etc. Alternatively or additionally, the top unit 100 may be arranged to receive data, e.g. in a wireless manner and/or by means of a station for receiving and reading a computer readable medium, such as a memory card, memory stick, CD-ROM, etc.

In embodiments, a side wall of the top unit 100 may be provided with a tablet computer, preferably built-in into said side wall.

Although the top unit 100 may thus be provided with one or multiple electronic visual displays 140, the top unit 100, in particular one or more outer surfaces of side walls of said top unit facing outwardly facing in the top unit's upright state may be provided with stationary decorations and/or displayed advertisements or promotions, in particular printed decorations, advertisements and/or promotions.

It is noted that the top unit 100 may be arranged to form a substantially rigid structure in its upright position 100A. Additionally or alternatively, the top unit 100 may be arranged to form a substantially rigid structure in its collapsed position 100B, e.g. in order to facilitate handling of a collapsed top unit, for instance when placing it into the trolley's main body or removing it from there.

In preferred embodiments, the top unit 100 may be provided with releasable fasteners or fixation means, such as for instance magnets, releasable snap fasteners, Velcro, or any other suitable means. The releasable fasteners or fixation means may for example be arranged to temporarily attach two side wall forming parts 111', 112', 114' to each other in an erected state of the respective side wall forming parts. For example, the fasteners or fixation means may be provided near adjacent edges of neighboring side walls of the top unit.

Additionally or alternatively, the top unit may be arranged to lock one or multiple parts, for example two hingedly interconnected parts, with respect to each other in one or multiple positions. In particular, the top unit 100 may be arranged to lock one or multiple side wall forming parts 111', 112', 114' with respect to the base part 101, in particular in the upright or erected position of the respective side wall forming part.

In preferred embodiments, the collapsible top unit 100 can be a foldable top unit, which is arranged to be collapsed by means of folding in the top unit 100 and/or by means of pivoting respective parts of the top unit with respect to each other.

Further, it is noted that that although the parts of the collapsible top unit 100 may be hingedly connected to each other, it is also possible that one or multiple parts 100C can be taken apart from one or multiple other parts 100D of the top unit. This is for example the case for the alternative collapsible top unit 100‴ of the embodiment shown at the right hand side of Fig. 5. Also this top unit 100‴ can be collapsed in order to enable storing said top unit 100‴ conveniently, in particular within the interior storage space 15 within the trolley's main body 10.

It is noted that for the purpose of clarity and a concise description features are described herein as part of the same or separate embodiments, However, it will be appreciated that the scope of the present disclosure may include embodiments having combinations of all or some of the features described.

For example, it will be appreciated by the skilled person that features described in the context of a trolley may also be used in a top unit as such, thus without a corresponding trolley, and that features described in the context of a top unit may also be utilized in the context of a trolley provided with a collapsible top unit.

Further, it is noted that the disclosure is not restricted to the embodiments described herein. It will be understood that many variants are possible, as far as they remain within the scope of the appended claims.

For instance, the top unit and/or the trolley's main body may be provided with one or multiple fasteners or connecters to releasably fixate or lock the top unit on top of said main body.

## Claims

1. Trolley (1), such as an airplane trolley or a railway trolley, comprising a substantially box-shaped main body (10) defining an interior space (15) in which beverages, food, merchandise and/or other items can be stored, said substantially box-shaped main body (10) having a top side (10') provided with a recess (20) which defines a peripheral wall (21) at least partly circumscribing the top side (10'),
wherein the trolley (1) is provided with a collapsible top unit (100) arranged for releasable placement on top of the trolley's main body (10),
wherein said collapsible top unit (100) further is arranged to be collapsible from an upright state (100A), in which a base part (101) of the collapsible top unit (100) is received at least partly within the recess (20) and multiple side walls (111, 112, 114) of the collapsible top unit (100) are extending upwards away from said base part (101) and said side walls (111, 112, 114) have a height (115H) of at least 15 cm and define a storage compartment (115) therebetween for temporarily providing additional storage space, into a storage state (100B), in which the collapsible top unit (100) is collapsed, such that parts of the collapsible top unit (100) defining the multiple upward extending side walls (111, 112, 114) in the upright state (100A) are substantially parallel with the base part (101) when the collapsible top unit (100) is collapsed,
wherein the width (115W) of the storage compartment (115) substantially corresponds with the width (15W) of the interior (15) of the substantially box-shaped main body (10) of the trolley (1), such that in said upright state (100A) of the collapsible top unit (100) said storage compartment (115) is arranged to receive therein a tray (8) or drawer dimensioned to be stored within the interior (15) of the substantially box-shaped main body (10) of the trolley (1).

2. Trolley (1) according to claim 1, wherein the collapsible top unit (100) comprises at least three side walls (111, 112, 114), which in the upright state (100A) of the collapsible top unit (100) define a left wall (112), a right wall (114) and an end wall (111) extending between said left wall (112) and said right wall (114), wherein at least said left wall (112), said end wall (111) and said right wall (114) define the storage compartment (115) at least partly.

3. Trolley (1) according to claim 1 or 2, wherein at least one of the side walls (111, 112, 114) is provided with an electronic visual display (140), preferably wherein said at least one electronic visual display (140) faces outwards with respect to the storage compartment (115) in the upright state (100A) of the collapsible top unit (100).

4. Trolley (1) according to claim 3, wherein the collapsible top unit (100) is provided with an embedded computer for controlling the at least one electronic visual display.

5. Trolley (1) according to any one of the preceding claims, wherein at least one of the multiple side walls (111, 112, 114) of the collapsible top unit (100) in the upright state (100A) is at least partly formed by a substantially panel-shaped part (111', 112', 114', 114'A) which is hingedly connected to the base part (101).

6. Trolley (1) according to any one of the preceding claims, wherein one or multiple parts (111', 112', 114', 114'A, 114'B) that define the multiple upward extending side walls (111, 112, 114) in the upright state (100A) can be substantially nontransparent.

7. Trolley (1) according to any one of the preceding claims, wherein in the collapsible top unit's upright state (100A), one or more outwardly facing surfaces of respective side walls (111, 112, 114) of the collapsible top unit (100) are substantially flush with outwardly facing surfaces of corresponding outer walls (11, 12, 14) of the substantially box-shaped main body (10) of the trolley (1).

8. Trolley (1) according to any one of the preceding claims, wherein in the storage state (100B) of the collapsible top unit (100), said collapsible top unit (100) has a width (100BW) corresponding with the width (15W) of the interior (15) of the substantially box-shaped main body (10) of the trolley (1).

9. Means of passenger transport, such as an aircraft or train or vessel, said means of passenger transport being provided with a trolley (1) according to any one of the preceding claims.

## Patentansprüche

1. Wagen (1), wie ein Flugzeugwagen oder ein Eisenbahnwagen, umfassend einen im Wesentlichen kastenförmigen Hauptkörper (10), der einen Innenraum (15) definiert, in dem Getränke, Lebensmittel, Handelswaren und/oder andere Gegenstände aufbewahrt werden können, wobei der im Wesentlichen kastenförmige Hauptkörper (10) eine Oberseite (10') aufweist, die mit einer Ausnehmung (20) versehen ist, die eine Umfangswand (21) definiert, die die Oberseite (10') wenigstens teilweise umschreibt,
wobei der Wagen (1) mit einer zusammenklappbaren oberen Einheit (100) versehen ist, die zur lösbaren Platzierung auf dem Hauptkörper (10) des Wagens angeordnet ist,
wobei die zusammenklappbare obere Einheit (100) ferner so angeordnet ist, dass sie von einem aufrechten Zustand (100A), in dem ein Basisteil (101) der zusammenklappbaren oberen Einheit (100) wenigstens teilweise in der Ausnehmung (20) aufgenommen ist und sich mehrere Seitenwände (111, 112, 114) der zusammenklappbaren oberen Einheit (100) von dem Basisteil (101) weg nach oben erstrecken und die Seitenwände (111, 112, 114) eine Höhe (115H) von wenigstens 15 cm aufweisen und ein Staufach (115) dazwischen definieren, um vorübergehend zusätzlichen Stauraum bereitzustellen, in einen Aufbewahrungszustand (100B) zusammenklappbar ist, in dem die zusammenklappbare obere Einheit (100) zusammengeklappt ist, so dass Teile der zusammenklappbaren oberen Einheit (100), die die mehreren sich nach oben erstreckenden Seitenwände (111, 112, 114) definieren, in dem aufrechten Zustand (100A) im Wesentlichen parallel zu dem Basisteil (101) sind, wenn die zusammenklappbare obere Einheit (100) zusammengeklappt ist,
wobei die Breite (115W) des Staufachs (115) im Wesentlichen der Breite (15W) des Innenraums (15) des im Wesentlichen kastenförmigen Hauptkörpers (10) des Wagens (1) entspricht, so dass das Staufach (115) in dem aufrechten Zustand (100A) der zusammenklappbaren oberen Einheit (100) so angeordnet ist, dass es darin eine Schale (8) oder eine Schublade aufnimmt, die so bemessen ist, dass sie in dem Innenraum (15) des im Wesentlichen kastenförmigen Hauptkörpers (10) des Wagens (1) aufbewahrt werden kann.

2. Wagen (1) nach Anspruch 1, wobei die zusammenklappbare obere Einheit (100) wenigstens drei Seitenwände (111, 112, 114) umfasst, die im aufrechten Zustand (100A) der zusammenklappbaren oberen Einheit (100) eine linke Wand (112), eine rechte Wand (114) und eine Endwand (111) definieren, die sich zwischen der linken Wand (112) und der rechten Wand (114) erstreckt, wobei wenigstens die linke Wand (112), die Endwand (111) und die rechte Wand (114) das Staufach (115) wenigstens teilweise definieren.

3. Wagen (1) nach Anspruch 1 oder 2, wobei wenigstens eine der Seitenwände (111, 112, 114) mit einer elektronischen Sichtanzeige (140) versehen ist, wobei die wenigstens eine elektronische Sichtanzeige (140) vorzugsweise im aufrechten Zustand (100A) der zusammenklappbaren oberen Einheit (100) in Bezug auf das Staufach (115) nach außen gerichtet ist.

4. Wagen (1) nach Anspruch 3, wobei die zusammenklappbare obere Einheit (100) mit einem eingebetteten Computer zur Steuerung der wenigstens einen elektronischen Sichtanzeige versehen ist.

5. Wagen (1) nach einem der vorhergehenden Ansprüche, wobei wenigstens eine der mehreren Seitenwände (111, 112, 114) der zusammenklappbaren oberen Einheit (100) im aufrechten Zustand (100A) wenigstens teilweise durch ein im Wesentlichen plattenförmiges Teil (111', 112', 114', 114'A) gebildet wird, das mit dem Basisteil (101) gelenkig verbunden ist.

6. Wagen (1) nach einem der vorhergehenden Ansprüche, wobei ein oder mehrere Teile (111', 112', 114', 114'A, 114'B), die die mehreren sich nach oben erstreckenden Seitenwände (111, 112, 114) im aufrechten Zustand (100A) definieren, im Wesentlichen undurchsichtig sein können.

7. Wagen (1) nach einem der vorhergehenden Ansprüche, wobei im aufrechten Zustand (100A) der zusammenklappbaren oberen Einheit eine oder mehrere nach außen weisende Flächen der jeweiligen Seitenwände (111, 112, 114) der zusammenklappbaren oberen Einheit (100) im Wesentlichen bündig mit nach außen weisenden Flächen der entsprechenden Außenwände (11, 12, 14) des im Wesentlichen kastenförmigen Hauptkörpers (10) des Wagens (1) sind.

8. Wagen (1) nach einem der vorhergehenden Ansprüche, wobei im Aufbewahrungszustand (100B) der zusammenklappbaren oberen Einheit (100) die zusammenklappbare obere Einheit (100) eine Breite (100BW) aufweist, die der Breite (15W) des Innenraums (15) des im Wesentlichen kastenförmigen Hauptkörpers (10) des Wagens (1) entspricht.

9. Personenbeförderungsmittel, wie ein Flugzeug oder ein Zug oder ein Schiff, wobei das Personenbeförderungsmittel mit einem Wagen (1) nach einem der vorhergehenden Ansprüche versehen ist.

## Revendications

1. Chariot (1), tel qu'un chariot d'avion ou un chariot d'un train comprenant un corps principal sensiblement en forme de caisson (10) définissant un espace intérieur (15) dans lequel des boissons, de la nourriture, des marchandises et/ou d'autres articles peuvent être stockés, ledit corps principal sensiblement en forme de caisson (10) ayant un côté supérieur (10') pourvu d'un évidement (20) qui définit une paroi périphérique (21) circonscrivant au moins partiellement le côté supérieur (10'),
dans lequel le chariot (1) est pourvu d'une unité supérieure repliable (100) agencée pour un placement amovible sur le dessus du corps principal du chariot (10),
dans lequel ladite unité supérieure repliable (100) est en outre agencée pour être repliable à partir d'un état redressé (100A), dans lequel une partie de base (101) de l'unité supérieure repliable (100) est reçue au moins partiellement dans l'évidement (20) et plusieurs parois latérales (111, 112, 114) de l'unité supérieure repliable (100) s'étendent vers le haut à partir de ladite partie de base (101) et lesdites parois latérales (111, 112, 114) ont une hauteur (115H) d'au moins 15 cm et définissent un compartiment de stockage (115) entre elles pour fournir temporairement un espace de stockage supplémentaire, pour passer dans un état de stockage (100B), dans lequel l'unité supérieure repliable (100) est repliée, de sorte que les parties de l'unité supérieure repliable (100) définissant les multiples parois latérales s'étendant vers le haut (111, 112, 114) à l'état redressé (100A) sont sensiblement disposées de façon parallèle à la partie de base (101) lorsque l'unité supérieure repliable (100) est repliée,
dans lequel la largeur (115W) du compartiment de stockage (115) correspond sensiblement à la largeur (15W) de l'intérieur (15) du corps principal sensiblement en forme de caisson (10) du chariot (1), de sorte que dans l'état redressé (100A) de l'unité supérieure repliable (100), ledit compartiment de stockage (115) est agencé pour y recevoir un plateau (8) ou un tiroir dimensionné pour être stocké à l'intérieur (15) du corps principal sensiblement en forme de caisson (10 ) du chariot (1).

2. Chariot (1) selon la revendication 1, dans lequel l'unité supérieure repliable (100) comprend au moins trois parois latérales (111, 112, 114) qui, à l'état redressé (100A) de l'unité supérieure repliable (100) définissent une paroi gauche (112), une paroi droite (114) et une paroi d'extrémité (111) s'étendant entre ladite paroi gauche (112) et ladite paroi droite (114), dans lequel au moins ladite paroi gauche (112), ladite paroi d'extrémité ( 111) et ladite paroi droite (114) définissent au moins partiellement le compartiment de stockage (115).

3. Chariot (1) selon la revendication 1 ou 2, dans lequel au moins une des parois latérales (111, 112, 114) est munie d'un afficheur visuel électronique (140), de préférence dans lequel ledit au moins un afficheur visuel électronique (140) est tourné vers l'extérieur par rapport au compartiment de stockage (115) dans l'état redressé (100A) de l'unité supérieure repliable (100).

4. Chariot (1) selon la revendication 3, dans lequel l'unité supérieure repliable (100) est munie d'un ordinateur embarqué pour contrôler le au moins un affichage visuel électronique.

5. Chariot (1) selon l'une quelconque des revendications précédentes, dans lequel au moins l'une des multiples parois latérales (111, 112, 114) de l'unité supérieure repliable (100) à l'état redressé (100A) est au moins partiellement formé par une partie sensiblement en forme de panneau (111', 112', 114', 114'A) qui est reliée de manière articulée à la partie de base (101).

6. Chariot (1) selon l'une quelconque des revendications précédentes, dans lequel une ou plusieurs parties (111', 112', 114', 114'A, 114'B) qui définissent les multiples parois latérales s'étendant vers le haut(111, 112, 114) à l'état redressé (100A) peut être sensiblement non transparent.

7. Chariot (1) selon l'une quelconque des revendications précédentes, dans lequel, dans l'état redressé (100A) de l'unité supérieure repliable, une ou plusieurs surfaces tournées vers l'extérieur des parois latérales respectives (111, 112, 114) de l'unité supérieure repliable (100) affleurent sensiblement les surfaces tournées vers l'extérieur des parois extérieures correspondantes (11, 12, 14) du corps principal sensiblement en forme de caisson (10) du chariot (1).

8. Chariot (1) selon l'une quelconque des revendications précédentes, dans lequel, dans l'état de stockage (100B) de l'unité supérieure repliable (100), ladite unité supérieure repliable (100) a une largeur (100BW) correspondant à la largeur (15W) de l'intérieur (15) du corps principal sensiblement en forme de caisson (10) du chariot (1).

9. Moyen de transport de passagers, tel qu'un aéronef ou un train ou un bateau, ledit moyen de transport de passagers étant pourvu d'un chariot (1) selon l'une quelconque des revendications précédentes.
